# EUROPEAN PATENT APPLICATION

(11) **EP 3 618 380 A1**
(43) Date of publication of application: **04.03.2020**
(21) Application number: 17920677.6
(22) Date of filing: 11.08.2017
(51) Int. Cl.: H04L 29/06

(54) **METHOD AND DEVICE FOR TRANSMITTING DATA**

(71) Applicant: GUANGDONG OPPO MOBILE TELECOMMUNICATIONS CORP., LTD., Wusha, Chang'an Dongguan, Guangdong 523860 (CN)
(72) Inventor: LIU, Jianhua, Dongguan, Guangdong 523860 (CN)
(74) Representative: Manitz Finsterwald Patent- und Rechtsanwaltspartnerschaft mbB
(86) International application number: PCT/CN2017/097034
(87) International publication number: WO 2019/028818

(57) **Abstract**

Methods and devices for transmitting data are provided. The method includes: appending, by a first device, a sequence number to each to-be-sent data packet of a plurality of to-be-sent data packets, to generate a plurality of first data packets; and transmitting, by the first device, the plurality of first data packets to a second device through a plurality of service paths. In the method of the embodiment of the present disclosure, the first device appends a sequence number to each to-be-sent data packet of the plurality of to-be-sent data packets, to generate a plurality of first data packets; and then sends the plurality of first data packets to the second device, so that the second device can re-sort the plurality of first data packets after receiving the plurality of first data packets, and then submit the re-sorted target data to the upper layer or other device in the proper sequence, which can improve the reliability of data transmission.

## Description

### TECHNICAL FIELD

Embodiments of the present disclosure relate to the field of communication, and more particularly, to a method and a device for transmitting data.

### BACKGROUND

In a fifth-generation mobile communication technology (5G) system, the terminal device can access service through the 3rd Generation Partnership Project (3GPP) or a non-3GPP network. Specifically, a service access network node is configured in the network side, and the service access network node is responsible for network access management through the 3GPP system or the non-3GPP system.

In the related art, when a terminal device initiates a service or during the process of the service, the terminal device or the service access management node can choose to distribute the services of the terminal in a 3GPP network or a non-3GPP network for simultaneous transmission to improve service throughput.

For example, if the non-3GPP is a wireless local area network (WLAN), when an application on the terminal device has data to be transmitted, the application data reaches the service access management node of the terminal device, and the service access management node distribute the application data according to regulations on the WLAN and the 3GPP networks for transmission, and the service access management node at the network receiving end receives the application data from the WLAN and the 3GPP network, respectively.

However, due to different transmission rates of different paths, the sequence in which the application data arrives at the receiving end is disordered, thereby reducing the reliability of data transmission.

### SUMMARY

Methods and devices for transmitting data are provided, which can effectively improve the reliability of data transmission.

In a first aspect, a method for transmitting data is provided, including:
appending, by a first device, a sequence number to each to-be-sent data packet of a plurality of to-be-sent data packets, to generate a plurality of first data packets; and
transmitting, by the first device, the plurality of first data packets to a second device through a plurality of service paths.

Due to the different transmission rates of different service paths, the sequence in which the plurality of first data packets arrives at the second device can be disordered.

In the method of the embodiment of the present disclosure, the first device appends a sequence number to each to-be-sent data packet of the plurality of to-be-sent data packets, to generate a plurality of first data packets; and then sends the plurality of first data packets to the second device, so that the second device can re-sort the plurality of first data packets after receiving the plurality of first data packets, and then submit the re-sorted target data to the upper layer or other device in the proper sequence, which can improve the reliability of data transmission.

In some possible implementations, transmitting, by the first device, the plurality of first data packets to a second device through a plurality of service paths includes:

transmitting, by the first device, the plurality of first data packets to the second device on a protocol IP layer interconnected between a plurality of networks corresponding to the plurality of service paths.

In some possible implementations, appending, by a first device, a sequence number to each to-be-sent data packet of a plurality of to-be-sent data packets, to generate a plurality of first data packets includes:
appending, by the first device, a sequence number to each to-be-sent data packet, to generate a plurality of first data packets on a first protocol layer.

In some possible implementations, the first protocol layer is located between a protocol IP layer and an application layer interconnected between networks.

In some possible implementations, the first protocol layer belongs to a second protocol layer, and the second protocol layer includes:
a transport control protocol TCP layer or a user datagram protocol UDP layer.

The method of the embodiment of the present disclosure can be effectively compatible with the existing protocol framework, and has strong applicability.

In some possible implementations, each first data packet of the plurality of first data packets includes at least one data unit.

In some possible implementations, the plurality of first data packets are data packets in the same data stream, or the plurality of first data packets are data packets on the same bearer.

In some possible implementations, the first device is any one of:
a terminal device, a service path management module, and a user equipment entity in a core network.

In a second aspect, a method for transmitting data is provided, including:
receiving, by a second device, a plurality of first data packets transmitted by a first device from a plurality of service paths; and
sorting, by the second device, the plurality of first data packets to generate target data.

In some possible implementations, receiving, by a second device, a plurality of first data packets transmitted by a first device from a plurality of service paths includes:
receiving, by the second device, the plurality of first data packets transmitted by the first device on a protocol IP layer that is interconnected between a plurality of networks corresponding to the plurality of service paths.

In some possible implementations, sorting, by the second device, the plurality of first data packets to generate target data includes:
parsing, by the second device, the plurality of first data packets on a first protocol layer, to obtain a sequence number of each data packet of the plurality of first data packets; and
sorting, by the second device, the plurality of first data packets according to the sequence number of each data packet, to generate the target data.

In some possible implementations, the first protocol layer is located between a protocol IP layer and an application layer interconnected between networks.

In some possible implementations, the first protocol layer belongs to a peripheral layer of a second protocol layer, and the second protocol layer includes:
a transport control protocol TCP layer or a user datagram protocol UDP layer.

In some possible implementations, the method further includes:
transmitting, by the second device, the target data to a third device or an upper layer of the first protocol layer.

In some possible implementations, each first data packet of the plurality of first data packets includes at least one data unit.

In some possible implementations, the plurality of first data packets are data packets in the same data stream, or the plurality of first data packets are data packets on the same bearer.

In some possible implementations, the second device is any one of:
a terminal device, a service path management module, and a user equipment entity in a core network.

In a third aspect, a device is provided, including:
a generating unit configured to append a sequence number to each to-be-sent data packet of a plurality of to-be-sent data packets, to generate a plurality of first data packets;
a transceiver unit configured to transmit the plurality of first data packets to a second device through a plurality of service paths.

In a fourth aspect, a device is provided, including:
a processor configured to append a sequence number to each to-be-sent data packet of a plurality of to-be-sent data packets, to generate a plurality of first data packets; and
a transceiver configured to transmit the plurality of first data packets to a second device through a plurality of service paths.

In a fifth aspect, a device is provided, including:
a transceiver unit configured to receive a plurality of first data packets transmitted by a first device from a plurality of service paths; and
a generating unit configured to sort the plurality of first data packets to generate target data.

In a sixth aspect, a device is provided, including:
a transceiver configured to receive a plurality of first data packets transmitted by a first device from a plurality of service paths; and
a processor configured to sort the plurality of first data packets to generate target data.

In a seventh aspect, a computer readable medium is provided for storing a computer program including instructions for performing the method embodiment of the first aspect or the second aspect described above.

In an eighth aspect, a computer chip is provided, including: an input interface, an output interface, at least one processor, and a memory, wherein the processor is configured to execute codes in the memory, and when the codes are executed, the processor can implement the processes performed by the first device in the method for transmitting data in the above first aspect and the implementations.

In a ninth aspect, a computer chip is provided, including: an input interface, an output interface, at least one processor, and a memory, wherein the processor is configured to execute codes in the memory, and when the codes are executed, the processor can implement the processes performed by the second device in the method for transmitting data in the above second aspect and the implementations.

In a tenth aspect, a communication system is provided, including the first device described above, and the second device described above.

### BRIEF DESCRIPTION OF THE DRAWINGS

FIG. 1 is an example of an application scenario of an embodiment of the present disclosure.
FIG. 2 is another example of an application scenario of an embodiment of the present disclosure.
FIG. 3 is a diagram of a method for transmitting data according to an embodiment of the present disclosure.
FIG. 4 is a schematic structural diagram of a first data packet according to an embodiment of the present disclosure.
FIG. 5 is a schematic block diagram of a first device of an embodiment of the present disclosure.
FIG. 6 is another schematic block diagram of a first device according to an embodiment of the present disclosure.
FIG. 7 is a schematic block diagram of a second device of an embodiment of the present disclosure.
FIG. 8 is another schematic block diagram of a second device according to an embodiment of the present disclosure.

### DETAILED DESCRIPTION

The technical solutions in the embodiments of the present disclosure will be described below with reference to the accompanying drawings.

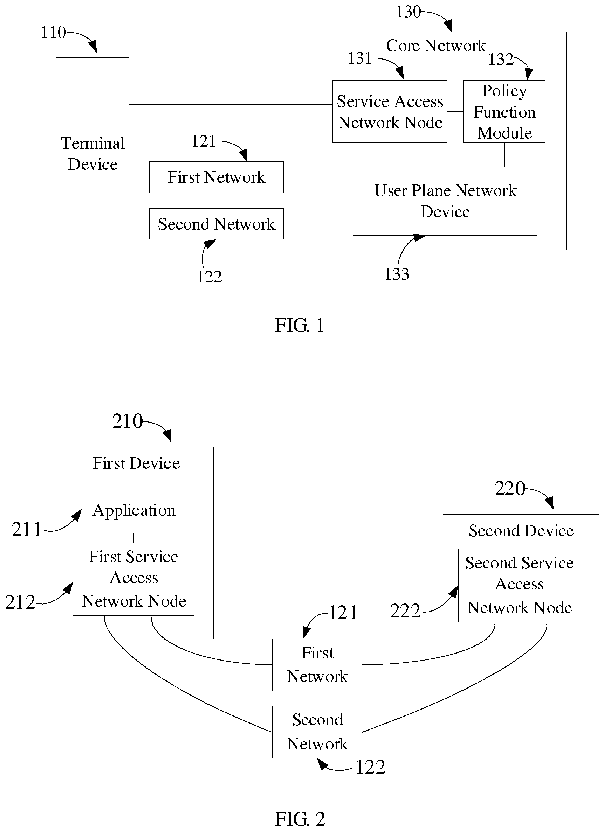

FIG. 1 is an example of an application scenario of an embodiment of the present disclosure;

As shown in FIG. 1, a terminal device 110 can select to distribute a service of the terminal device 110 in a first network 121 and a second network 122 for simultaneous transmission, in order to improve the service throughput. It will be appreciated that embodiments of the present disclosure are applicable to any communication system including the first network 121 and the second network 122. One of the first network 121 and the second network 122 belongs to the 3GPP network system, and the other belongs to the non-3GPP network system.

Specifically, a service access network node 131 is configured in the core network, and the service access network node 131 is responsible for managing network access of the first network 121 and the second network 122. In addition, a policy function module 132 is also configured in the core network for policy management.

The 3GPP network system can include: a Long Term Evolution (LTE) system, a Wideband Code Division Multiple Access (WCDMA) system, and a Time Division-Synchronous Code Division Multiple Access (TD-SCDMA) system, a Global System of Mobile communication (GSM) system, among others. The non-3GPP network system can include: a wireless local area network (WLAN) system, a high rate packet data (HRPD) network, an evolved high speed packet data (EHRPD) network, and a Worldwide Interoperability for Microwave Access (WiMAX) system and so on. It should be understood that the above network system is only an exemplary description, and is not specifically limited in the embodiment of the present disclosure.

FIG. 2 is another example of an application scenario of an embodiment of the present disclosure.

As shown in FIG. 2, an application 211 on a first device 210 (the transmitting end) has data to be transmitted, the data of the application 211 reaches a first service access network node 212 of the first device, the first service access network node 212 distributes the data of the application 211 to the first network 121 and the second network 122 for transmission according to regulations, and a second service access network node 222 at a second device 220 (the receiving end) receives the data of the application 211 from the first network 121 and the second network 122, respectively.

However, because the transmission rates of different paths are different, the sequence in which the data of the application 211 arrives at the receiving end (the second device 220) is disordered, thereby reducing the reliability of data transmission.

Therefore, the embodiment of the present disclosure provides a method for transmitting data, through a re-sorting function configured by the receiving end (the second device 220), the received data is delivered to an upper layer or other network device entity as desired, thereby improving the reliability of data transmission. That is to say, the method in the embodiment of the present disclosure can ensure that the data received by the receiving end (the second device 220) from the multiple paths is sequentially delivered to the upper layer or other devices.

That is, the first device and the second device in the embodiments of the present disclosure can be any device configured with a re-sorting function. For example, the first device or the second device can be a terminal device, a service path management module, and a user device entity in a core network.

The terminal device can also be referred to as an access terminal, a user equipment (User Equipment, UE), a subscriber unit, a subscriber station, a mobile station, a mobile platform, a remote station, a remote terminal, a mobile device, a user terminal, a terminal, a wireless communication device, a user agent or a user apparatus. For example, it can be a cellular phone, a cordless phone, a Session Initiation Protocol (SIP) phone, a Wireless Local Loop (WLL) station, a Personal Digital Assistant (PDA), and a handheld device with wireless communication function, a computing device or other processing device connected to a wireless modem, an in-vehicle device, a wearable device, and a terminal device in a 5G network, and the like.

The specific implementation manner of the transmission data in the embodiment of the present disclosure is described below.

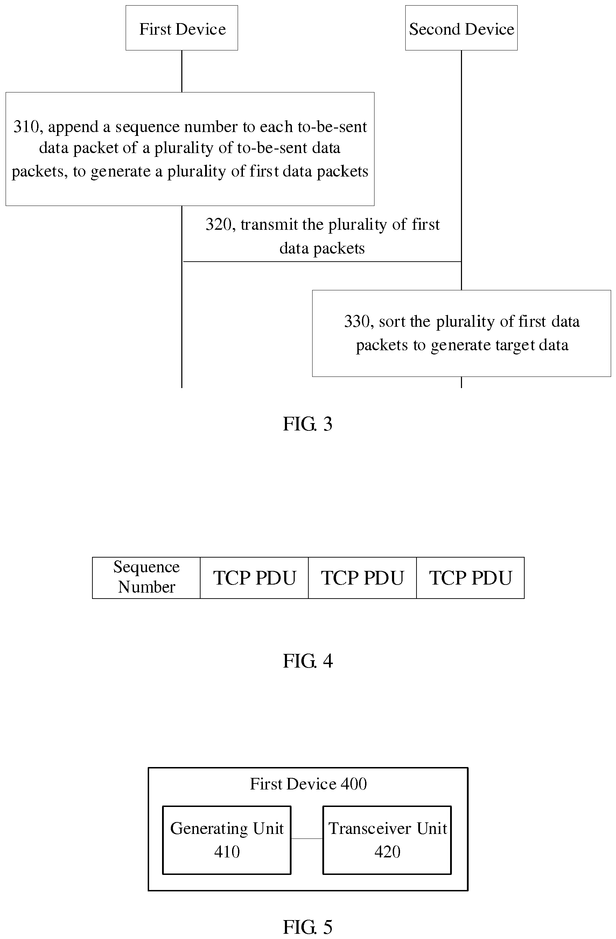

FIG. 3 is a schematic flowchart of a method for transmitting data according to an embodiment of the present disclosure.

As shown in FIG. 3, the method includes the following steps.

In 310, the first device appends a sequence number to each to-be-sent data packet of a plurality of to-be-sent data packets, to generate a plurality of first data packets.

Specifically, the first device appends a sequence number to each to-be-sent data packet of the plurality of to-be-sent data packets, to generate a plurality of first data packets; and the first device transmits the plurality of first data packets to the second device through a plurality of service paths.

By way of example and not limitation, the first device can append a sequence number to each of the to-be-sent data packets on a first protocol layer, to generate the plurality of first data packets. The first protocol layer is located between an Internet Protocol (IP) layer and an application layer.

The following is an example in which the first protocol layer can belong to a (Transmission Control Protocol, TCP) layer.

It can be understood that in the data transmission process, the application layer transmits a data stream to the TCP layer, and TCP divides the data stream into segments of an appropriate length, and the maximum segment size (MSS) is usually limited by the maximum transfer unit (MTU) of the data link layer of the network to which the computer is connected. After that, the TCP passes the packet to the IP layer, which passes the packet over the network to the TCP layer of the receiving entity.

In this embodiment of the present disclosure, the second protocol layer includes a TCP layer. In other words, the first protocol layer in the embodiment of the present disclosure is a peripheral layer of the TCP layer. After the TCP layer divides the data stream into segments of an appropriate length, the first device can append a sequence number in each segment to form a plurality of first data packets in the embodiment of the present disclosure.

It can be seen that, when the second protocol layer includes the TCP layer, the plurality of first data packets are data packets in the same data stream, but it should be noted that the embodiment of the present disclosure is not limited thereto. For example, the plurality of first data packets can also be data packets on the same bearer.

It should be understood that the peripheral layer in which the first protocol layer is the TCP layer is taken as an example in the embodiment of the present disclosure, but the embodiment of the present disclosure is not limited thereto. For example, the first protocol layer is a peripheral layer of a User Datagram Protocol (UDP), that is, the second protocol layer includes a UDP layer. For another example, the first protocol layer can be independent of the existing protocol layers, that is, the first protocol layer is a separate protocol layer.

In addition, it should be noted that each first data packet of the plurality of first data packets in the embodiment of the present disclosure includes at least one data unit. Specifically, the first data packet of the embodiment of the present disclosure can include a sequence number and at least one TCP Protocol Data Unit (PDU), taking the first protocol layer being the peripheral layer of the TCP layer as an example. For example, the first data packet as shown in FIG. 4 includes a sequence number and three TCP PDUs.

In 320, the first device transmits the plurality of first data packets to the second device.

As an example and not by way of limitation, the first device can transmit the plurality of first data packets to the second device on the plurality of IP layers corresponding to the plurality of service paths. In addition, the second device can receive the plurality of first data packets transmitted by the first device on plurality of IP layers corresponding to the plurality of service paths.

In 330, the second device sorts the plurality of first data packets to generate target data.

Specifically, after the second device receives the plurality of first data packets transmitted by the first device from the plurality of service paths, the target data can be generated by sorting the plurality of first data packets.

Due to the different transmission rates of different service paths, the sequence in which the plurality of first data packets arrives at the second device can be disordered. Therefore, the second device re-sorts the plurality of first data packets, and then delivers the target data to the upper layer or other devices in order, thereby improving the reliability of data transmission.

Optionally, after the second device receives the plurality of first data packets transmitted by the first device from the plurality of service paths, the plurality of first data packets are parsed on the first protocol layer, to obtain the sequence number of each data packet in the plurality of first data packet; and then, according to the sequence number of each data packet, the plurality of first data packets are sorted to generate the target data.

In other words, the second device can re-sort the plurality of first data packets on the first protocol layer in the embodiment of the present disclosure.

It should be understood that, in the embodiment of the present disclosure, the first protocol layer of the second device for re-sorting can be the same as or different from the first protocol layer used by the first device for appending the sequence number, which will not be described herein to avoid repetition.

FIG 5 is a schematic block diagram of a first device of an embodiment of the present disclosure. It should be understood that the first device can be a terminal device, a service path management module, or a user equipment entity in a core network.

As shown in FIG. 5, the first device 400 includes the following components.

A generating unit 410 is configured to append a sequence number to each to-be-sent data packet of a plurality of to-be-sent data packets, to generate a plurality of first data packets.

A transceiver unit 420 is configured to transmit the plurality of first data packets to the second device through a plurality of service paths.

Optionally, the transceiver unit 420 is specifically configured to:
transmit the plurality of first data packets to the second device on a protocol IP layer interconnected between the plurality of networks corresponding to the plurality of service paths.

Optionally, the generating unit 410 is specifically configured to:
on the first protocol layer, append a sequence number to each to-be-sent data packet, to generate a plurality of first data packets.

Optionally, the first protocol layer is located between a protocol IP layer and an application layer interconnected between the networks.

Optionally, the first protocol layer belongs to a second protocol layer, where the second protocol layer includes: a transport control protocol TCP layer or a user datagram protocol UDP layer.

Optionally, each first data packet of the plurality of first data packets includes at least one data unit.

Optionally, the plurality of first data packets are data packets in the same data stream, or the plurality of first data packets are data packets on the same bearer.

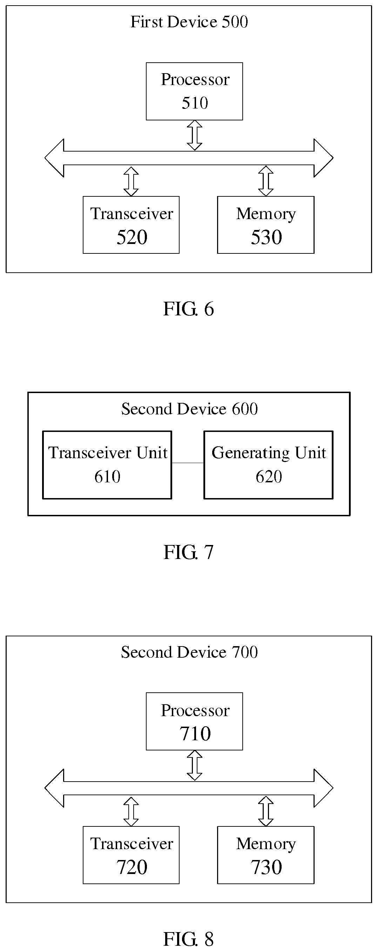

It should be noted that in the embodiment of the present disclosure, the generating unit 410 can be implemented by a processor, and the transceiver unit 420 can be implemented by a transceiver. As shown in FIG. 6, the first device 500 can include a processor 510, a transceiver 520, and a memory 530. The memory 530 can be configured to store indication information, and can also be configured to store codes, instructions, and the like executed by the processor 510. The various components in the first device 500 are connected by a bus system, wherein the bus system includes a power bus, a control bus, and a status signal bus in addition to the data bus. It should be understood that the first device 500 shown in FIG. 6 can implement the various processes implemented by the first device in the above method embodiment of FIG. 3, which will not be described herein to avoid repetition.

FIG. 7 is a schematic block diagram of a second device 600 according to an embodiment of the present disclosure. It should be understood that the second device can be a terminal device, a service path management module, or a user equipment entity in a core network.

As shown in FIG. 7, the second device 600 includes the following components.

A transceiver unit 610 is configured to receive a plurality of first data packets transmitted by the first device from a plurality of service paths.

A generating unit 620 is configured to sort the plurality of first data packets to generate target data.

Optionally, the transceiver unit 610 is specifically configured to:
receive the plurality of first data packets transmitted by the first device on a protocol IP layer that is interconnected between the plurality of networks corresponding to the plurality of service paths.

Optionally, the generating unit 620 is specifically configured to:
parse the plurality of first data packets on the first protocol layer, to obtain a sequence number of each data packet of the plurality of first data packets; and then, according to the sequence number of each data packet, sort the plurality of first data packets to generate the target data.

Optionally, the first protocol layer is located between a protocol IP layer and an application layer interconnected between the networks.

Optionally, the first protocol layer belongs to a peripheral layer of the second protocol layer, and the second protocol layer includes: a Transmission Control Protocol TCP layer or a User Datagram Protocol UDP layer.

Optionally, the transceiver unit 610 is further configured to:
transmit the target data to a third device or the upper layer of the first protocol layer.

Optionally, each first data packet of the plurality of first data packets includes at least one data unit.

Optionally, the plurality of first data packets are data packets in the same data stream, or the plurality of first data packets are data packets on the same bearer.

It should be noted that, in the embodiment of the present disclosure, the transceiver unit 610 can be implemented by a transceiver, and the generating unit 620 can be implemented by a processor. As shown in FIG. 8, the second device 700 can include a processor 710, a transceiver 720, and a memory 730. The memory 730 can be configured to store indication information, and can also be configured to store codes, instructions, and the like executed by the processor 710. The various components in the second device 700 are connected by a bus system, wherein the bus system includes a power bus, a control bus, and a status signal bus in addition to the data bus. It should be understood that the second device 700 shown in FIG. 8 can implement the various processes implemented by the second device in the above method embodiment of FIG. 3, which will not be described herein to avoid repetition.

The method embodiments in the embodiments of the present disclosure can be applied to a processor or implemented by a processor.

The processor can be an integrated circuit chip with signal processing capabilities. In the implementation process, each step of the above method embodiment can be completed by an integrated logic circuit of hardware in a processor or instructions in a form of software. The above processor can be a general purpose processor, a digital signal processor (DSP), an application specific integrated circuit (ASIC), a field programmable gate array (FPGA) or programming logic devices, transistor logic devices, discrete hardware components and the like. The methods, steps, and logical block diagrams disclosed in the embodiments of the present disclosure can be implemented or executed. The general purpose processor can be a microprocessor or the processor can be any conventional processor or the like. The steps of the method disclosed in the embodiment of the present disclosure can be directly implemented as a hardware decoding processor, or can be performed by a combination of hardware and software modules in the decoding processor. The software modules can be located in a conventional storage medium such as a random access memory, a flash memory, a read only memory, a programmable read only memory or an electrically erasable programmable memory, a register, and the like. The storage medium is located in the memory, and the processor reads information in the memory and completes the steps of the above method with the hardware.

It can be understood that, in the embodiment of the present disclosure, the memory can be a volatile memory or a non-volatile memory, or can include both volatile and non-volatile memory. The non-volatile memory can be a read-only memory (ROM), a programmable read only memory (PROM), an erasable programmable read only memory (erasable PROM, EPROM), or an electrical Erase programmable EPROM (EEPROM) or a flash memory. The volatile memory can be a random access memory (RAM) that functions as an external cache. By way of example and without limitation, many forms of RAM are available, such as a static random access memory (SRAM), a dynamic random access memory (DRAM), a synchronous dynamic random access memory (synchronous DRAM, SDRAM), double data rate synchronous DRAM (DDR SDRAM), an enhanced synchronous dynamic random access memory (ESDRAM), a synchronously connected dynamic random access memory (synch link DRAM, SLDRAM) and a direct memory bus random access memory (DR RAM). It should be noted that the memories of the systems and methods described herein are intended to include, but not limited to, these and any other suitable type of memory.

In the end, it is to be understood that the terms used in the embodiments of the present disclosure and the appended claims are merely for the purpose of describing particular embodiments, and are not intended to limit the embodiments.

For example, the singular forms "a", "an" and "the" used in the embodiments of the present disclosure and the appended claims also intended to include plurality forms, unless the context clearly indicates other meanings.

For another example, the terms first device and second device can be employed in the embodiments of the present disclosure, but these devices should not be limited to these terms. These terms are only used to distinguish one device from another.

Those of ordinary skill in the art will appreciate that the elements and algorithm steps of the various examples described in connection with the embodiments disclosed herein can be implemented in electronic hardware or a combination of computer software and electronic hardware. Whether these functions are performed in hardware or software depends on the specific application and design constraints of the solution. A person skilled in the art can use different methods to implement the described functions for each particular application, but such implementation should not be considered to be beyond the scope of the embodiments of the present disclosure.

A person skilled in the art can clearly understand that for the convenience and brevity of the description, the specific working process of the system, the device and the unit described above can refer to the corresponding process in the above method embodiments, and details are not repeated herein.

In the several embodiments provided in the present disclosure, it should be understood that the disclosed systems, devices, and methods can be implemented in other ways. For example, the device embodiments described above are only illustrative. For example, the division of the unit is only a logical function division. In actual implementation, there can be another division manner, for example, a plurality of units or components can be combined or can be integrated into another system, or some features can be ignored or not executed. In addition, the mutual coupling or direct coupling or communication connection shown or discussed can be an indirect coupling or communication connection through some interfaces, devices or units, and can be in an electrical, mechanical or other form.

The units described as separate components can or can not be physically separated, and the components shown as units can or can not be physical units, that is, can be located in one place, or can be distributed to a plurality of network units. Some or all of the units can be selected according to actual needs to achieve the objectives of the embodiments of the present disclosure.

In addition, each functional unit in the embodiment of the present disclosure can be integrated into one processing unit, or each unit can exist physically separately, or two or more units can be integrated into one unit.

If implemented in the form of a software functional unit and sold or used as a standalone product, it can be stored in a computer readable storage medium. Based on such understanding, the technical solution of the embodiments of the present disclosure in essential, or the part contributing to the prior art or the part of the technical solution, can be embodied in the form of a software product stored in a storage medium. The computer software product is stored in a storage medium and includes instructions for causing a computer device to perform all or part of the steps of the method described in the embodiments of the present disclosure. The above storage medium includes: a U disk, a mobile hard disk, a read only memory, a random access memory, a magnetic disk, or an optical disk, and the like, which can store program codes.

The above is only a specific embodiment of the present disclosure, but the scope of protection of the present disclosure is not limited thereto, and changes or substitutions that could be easily contemplated by any person skilled in the art within the technical scope disclosed in the present disclosure should be covered by the scope of protection of this application. Therefore, the protection scope of the present disclosure should be subject to the protection scope of the claims.

## Claims

1. A method for transmitting data, comprising:
appending, by a first device, a sequence number to each to-be-sent data packet of a plurality of to-be-sent data packets, to generate a plurality of first data packets; and
transmitting, by the first device, the plurality of first data packets to a second device through a plurality of service paths.

2. The method according to claim 1, wherein transmitting, by the first device, the plurality of first data packets to the second device through the plurality of service paths comprises:
transmitting, by the first device, the plurality of first data packets to the second device on a protocol IP layer interconnected between a plurality of networks corresponding to the plurality of service paths.

3. The method according to claim 1 or 2, wherein appending, by the first device, the sequence number to each to-be-sent data packet of the plurality of to-be-sent data packets, to generate the plurality of first data packets comprises:
appending, by the first device, the sequence number to each to-be-sent data packet, to generate the plurality of first data packets on a first protocol layer.

4. The method according to claim 3, wherein the first protocol layer is located between a protocol IP layer and an application layer interconnected between networks.

5. The method according to claim 4, wherein the first protocol layer belongs to a second protocol layer, and the second protocol layer comprises:
a transport control protocol TCP layer or a user datagram protocol UDP layer.

6. The method according to any one of claims 1 to 5, wherein each first data packet of the plurality of first data packets comprises at least one data unit.

7. The method according to any one of claims 1 to 6, wherein the plurality of first data packets are data packets in the same data stream, or the plurality of first data packets are data packets on the same bearer.

8. The method according to any one of claims 1 to 7, wherein the first device is any one of:
a terminal device, a service path management module, and a user equipment entity in a core network.

9. A method for transmitting data, comprising:
receiving, by a second device, a plurality of first data packets transmitted by a first device from a plurality of service paths; and
sorting, by the second device, the plurality of first data packets to generate target data.

10. The method according to claim 9, wherein receiving, by the second device, the plurality of first data packets transmitted by the first device from the plurality of service paths comprises:
receiving, by the second device, the plurality of first data packets transmitted by the first device on a protocol IP layer that is interconnected between a plurality of networks corresponding to the plurality of service paths.

11. The method according to claim 9 or 10, wherein sorting, by the second device, the plurality of first data packets to generate target data comprises:
parsing, by the second device, the plurality of first data packets on a first protocol layer, to obtain a sequence number of each data packet of the plurality of first data packets; and
sorting, by the second device, the plurality of first data packets according to the sequence number of each data packet, to generate the target data.

12. The method according to claim 11, wherein the first protocol layer is located between a protocol IP layer and an application layer interconnected between networks.

13. The method according to claim 12, wherein the first protocol layer belongs to a peripheral layer of a second protocol layer, and the second protocol layer comprises:
a transport control protocol TCP layer or a user datagram protocol UDP layer.

14. The method according to any one of claims 11 to 13, further comprising:
transmitting, by the second device, the target data to a third device or an upper layer of the first protocol layer.

15. The method according to any one of claims 9 to 14, wherein each first data packet of the plurality of first data packets comprises at least one data unit.

16. The method according to any one of claims 9 to 15, wherein the plurality of first data packets are data packets in the same data stream, or the plurality of first data packets are data packets on the same bearer.

17. The method according to any one of claims 9 to 16, wherein the second device is any one of:
a terminal device, a service path management module, and a user equipment entity in a core network.

18. A device comprising:
a generating unit configured to append a sequence number to each to-be-sent data packet of a plurality of to-be-sent data packets, to generate a plurality of first data packets;
a transceiver unit configured to transmit the plurality of first data packets to a second device through a plurality of service paths.

19. The device according to claim 18, wherein the transceiver unit is specifically configured to:
transmit the plurality of first data packets to the second device on a protocol IP layer interconnected between a plurality of networks corresponding to the plurality of service paths.

20. The device according to claim 18 or 19, wherein the generating unit is specifically configured to:
append a sequence number to each to-be-sent data packet, to generate a plurality of first data packets on a first protocol layer.

21. The device according to claim 20, wherein the first protocol layer is located between a protocol IP layer and an application layer interconnected between networks.

22. The device according to claim 21, wherein the first protocol layer belongs to a second protocol layer, and the second protocol layer comprises:
a transport control protocol TCP layer or a user datagram protocol UDP layer.

23. The device according to any one of claims 18 to 22, wherein each first data packet of the plurality of first data packets comprises at least one data unit.

24. The device according to any one of claims 18 to 23, wherein the plurality of first data packets are data packets in the same data stream, or the plurality of first data packets are data packets on the same bearer.

25. A device comprising:
a transceiver unit configured to receive a plurality of first data packets transmitted by a first device from a plurality of service paths; and
a generating unit configured to sort the plurality of first data packets to generate target data.

26. The device according to claim 25, wherein the transceiver unit is specifically configured to:
receive the plurality of first data packets transmitted by the first device on a protocol IP layer that is interconnected between a plurality of networks corresponding to the plurality of service paths.

27. The device according to claim 25 or 26, wherein the generating unit is specifically configured to:
parse the plurality of first data packets on a first protocol layer, to obtain a sequence number of each data packet of the plurality of first data packets; and
sort the plurality of first data packets according to the sequence number of each data packet, to generate the target data.

28. The device according to claim 27, wherein the first protocol layer is located between a protocol IP layer and an application layer interconnected between networks.

29. The device according to claim 28, wherein the first protocol layer belongs to a peripheral layer of a second protocol layer, and the second protocol layer comprises:
a transport control protocol TCP layer or a user datagram protocol UDP layer.

30. The device according to any one of claims 27 to 29, wherein the transceiver unit is further configured to:
transmit the target data to a third device or an upper layer of the first protocol layer.

31. The device according to any one of claims 25 to 30, wherein each first data packet of the plurality of first data packets comprises at least one data unit.

32. The device according to any one of claims 25 to 31, wherein the plurality of first data packets are data packets in the same data stream, or the plurality of first data packets are the same The data packet on the bearer.
